# EUROPÄISCHE PATENTSCHRIFT

(11) **EP 1 183 931 B1**
(45) Veröffentlichungstag und Bekanntmachung des Hinweises auf die Patenterteilung: **15.06.2005**
(21) Anmeldenummer: 01120121.7
(22) Anmeldetag: 22.08.2001
(51) Int. Cl.: A01D 34/00

(54) **Gerät zur Rasen-, Garten- bzw. Grundstückspflege**
Device for lawn, garden and field maintenance
Dispositif pour l'entretien du gazon, jardin et champ

(30) Priorität: 02.09.2000 DE 10043241
(43) Veröffentlichungstag der Anmeldung: 06.03.2002
(73) Patentinhaber: SABO - Maschinenfabrik GmbH (vormals: GAMA Golf & Areal Maschinen GmbH), D-51645 Gummersbach (DE)
(72) Erfinder: Franz, Joseph, 51766 Engelskirchen (DE)
(74) Vertreter: Magin, Ludwig Bernhard

(56) Entgegenhaltungen:
- EP-A- 0 903 074
- DE-U- 9 005 367
- GB-A- 816 145
- GB-A- 2 328 359
- US-A- 3 729 908
- US-A- 3 791 116
- US-A- 4 753 062
- PATENT ABSTRACTS OF JAPAN vol. 1996, no. 11, 29. November 1996 (1996-11-29) -& JP 08 172843 A (RYOBI LTD), 9. Juli 1996 (1996-07-09)

## Beschreibung

Die Erfindung betrifft ein Gerät vorzugsweise zur Rasen-, Garten- bzw. Grundstückspflege mit einem beweglich mit dem Gerät verbindbaren Führungsholm.

Handgeführte bzw. handgeschobene Rasenmäher weisen oftmals einen Führungsholm auf, der an dem Rasenmäher bzw. einem Gehäuse in einem rückwärtigen Bereich angeordnet ist. Solche Führungsholme können beweglich vorgesehen sein, so daß sie bei Nichtgebrauch oder zum Transport in eine Stellung gebracht werden können, in der die Rasenmäher einen geringeren Platzbedarf aufweisen. Um Wartungs- bzw. Reinigungsarbeiten an einer Unterseite des Gehäuses oder an Arbeitseinheiten, wie Mähmessern, durchführen zu können, die unterhalb des Gehäuses angeordnet sind, wird dieses üblicherweise auf die Seite gekippt. Insbesondere bei einen Verbrennungsmotor aufweisenden Geräten weist eine seitlich verkippte Stellung des Geräts den Nachteil auf, daß Betriebsmittel in Form von Kraftstoff oder auch von Schmier- oder Kühlmittel in Bereiche des Verbrennungsmotors, wie beispielsweise einen Vergaser, gelangen können bzw. sich in solchen stauen, die dafür nicht vorgesehen sind. So kann es beispielsweise zur Verschmutzung eines Filters durch Kraftstoff kommen oder es werden bestimmte Bereiche des Verbrennungsmotors mit Kraftstoff überflutetet, so daß es zu Problemen bei einem Starten bzw. Anlassen des Verbrennungsmotors kommen kann.

Die US-A-4,958,804 zeigt eine Hubeinrichtung für Rasenmäher, die einen Hubrahmen aufweist, mittels dessen der Rasenmäher bzw. das Gerät in eine angehobene Stellung gebracht werden kann, so daß Wartungsarbeiten und Reparaturen an der Unterseite des Geräts ausgeführt werden können, ohne daß der Rasenmäher auf die Seite gelegt werden muß.

Die DE-U1-90 05 367 zeigt einen Rasenmäher mit einem Fangkorb, welcher mit dem Rasenmäher trennbar verbunden ist. Bei Druck auf ein Fußpedal löst sich ein Halteranker des Fangkorbs, auf welchem sich die Mähvorrichtung abstützen kann.

Die FR-A1-0 903 074 zeigt einen Rasenmäher mit einem sich auf Rädern abstützenden Gehäuse und einem Fangsack, der an dem Gehäuse im Bereich einer Auswurföffnung unterhalb eines Führungsholms vorgesehen ist. Der Führungsholm ist mit dem Gehäuse verschwenkbar verbunden, so daß er von dem Fangsack bzw. der Auswurföffnung weg, bezogen auf das Gehäuse nach vorn verschwenkt werden kann.

Die GB-A-2 328 359 offenbart einen Rasenmäher mit einem zweiteiligen Führungsholm, welcher zum Zwecke der Aufbewahrung oberhalb eines Gehäuses des Rasenmähers zusammengefaltet werden kann.

Die gattungsgemäße JP-A-08 172843 zeigt ein Gerät zur Rasenpflege mit einem zweiteiligen Führungsholm, der einen ersten Teil aufweist, der mit dem Gerät schwenkbar verbunden ist, so daß sich das Gerät in einer nach vorn geschwenkten Stellung auf dem Führungsholm abstützen kann. Das der Erfindung zugrunde liegende Problem wird darin gesehen, daß bekannte Geräte zur Rasen-, Garten- und Grundstückspflege zu Wartungszwecken auf die Seite gelegt werden müssen bzw. daß aufwendige Hebeeinrichtungen notwendig sind, um die Nachteile eines seitlichen Kippens zu vermeiden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise ist der Führungsholm in eine Stellung bringbar, in der sich das Gerät in einem rückwärts geschwenkten Zustand mittels des Führungsholms auf einem Untergrund abstützen kann und in dem es sich in einer stabilen Gleichgewichtslage befindet, so daß ein Kippen des Geräts nach hinten möglich ist, ohne daß der Führungsholm einem solchen entgegensteht, und es ist eine sichere Positionierung des Geräts durch ein Abstützen über den Führungsholm gegeben. Hierzu wird der Führungsholm vorzugsweise in eine Position gebracht, in der der Schwerpunkt des Geräts bei einem Nach-Rückwärts-Kippen des Geräts und Abstützen durch den Führungsholm zwischen einer Schwenkachse des Geräts, die beispielsweise durch die Achse rückwärtiger Räder oder eine Gehäusekante gebildet werden kann, und dem Abstützpunkt des Führungsholms auf dem Boden angeordnet ist. Bei einem Gerät zur Rasen-, Garten- bzw. Grundstückspflege kann es sich um ein handgeschobenes oder um ein handgeführtes Gerät wie ein Mähgerät, beispielsweise in der Art eines Rasenmähers, wie einem Spindelmäher oder einem Sichelmäher, handeln. Es ist aber auch denkbar, daß ein solches Gerät ein Laubsammler oder - räumgerät, ein Schneeräumgerät, ein Kehrgerät oder ein ähnliches Gerät ist.

Vorzugsweise handelt es sich bei der Stellung des Führungsholms um eine bezogen auf das Gehäuse nach vorn geschwenkte Außer-Betriebsstellung. Es kann vorgesehen sein, daß ein Betrieb des Geräts bzw. der Arbeitseinheit in dieser Stellung möglich ist, beispielsweise um diese testen zu können, vorzugsweise wird ein Betrieb aber unterbunden, um Gefährdungen beispielsweise einer Bedienungsperson entgegenzuwirken.

Der Führungsholm kann in der Stellung beispielsweise an einem Anschlag anliegen oder anderweitig derart an einer Bewegung gehindert werden, so daß er das Gewicht des Gehäuses abstützen kann. Die Stabilität bzw. Sicherheit kann weiter erhöht werden, wenn der Führungsholm in dieser Stellung sicherbar ist, so daß eine Bewegung nicht möglich ist und der Führungsholm eine dauerhafte Abstützung gewährleistet. Hierzu kann der Führungsholm beispielsweise in bekannter Weise mittels eines (oder mehrerer) Bolzens oder Stift(e)s an dem Gerät bzw. dessen Gehäuse festgelegt werden, indem dieser durch Aussparungen in dem Führungsholm und dem Gehäuse hindurchgesteckt wird und beispielsweise durch einen Sicherungsring gegen ein Herausfallen gesichert wird. Es sind aber auch Anordnungen mit Riegeln, Laschen etc. denkbar.

Darüber hinaus kann vorgesehen sein, daß der Führungsholm zumindest in einer Stellung, bei der es sich vorzugsweise um eine Betriebsstellung handelt, festgelegt werden kann, so daß einem unbeabsichtigten Verschwenken entgegengewirkt wird. Die Verriegelung des Führungsholms ist abhängig von der Stellung einer Sicherheitseinrichtung, bei der es sich beispielsweise um eine Totmannschaltung bzw. einen Not-Aus-Schalter, einen Motorbremsbügel bzw. eine Motorbremseinrichtung oder auch um eine sonstige Verriegelung für einen weiteren Bauteil, insbesondere für einen sicherheitsrelevanten Bauteil, wie beispielsweise eine Abdeckklappe für eine Auswurföffnung etc., handeln kann, die derart auf einen Antrieb des Geräts wirkt, daß dieser nur betrieben werden kann, wenn sich die Sicherheitseinrichtung in einer bestimmten Stellung oder einem bestimmten Zustand befindet. Die Verrieglung kann aber auch mit einem Fußhebel bzw. einem Pedal zusammenwirken oder die Sicherheiteinrichtung kann als ein solcher bzw. ein solches ausgebildet sein.

Vorzugsweise wirkt die Verriegelungseinrichtung direkt oder indirekt mit der Sicherheitseinrichtung beispielsweise derart zusammen, daß Mittel vorgesehen sind, die die Stellung oder den Zustand der Sicherheitseinrichtung an die Verriegelungseinrichtung übertragen bzw. übermitteln, so daß deren Stellung beeinflußt werden kann. Dies kann beispielsweise über Sensoren bzw. elektrische Einrichtungen oder über pneumatische, hydraulische vorzugsweise aber über mechanische Einrichtungen, wie beispielsweise Zug-Druck-Kabel, bewirkt werden. Diese Mittel können darüber hinaus auch mit einer Motorbremse, die einen Betrieb des Antriebs des Geräts ermöglicht bzw. unterbindet, verbunden sein. Die Motorbremse kann aber auch mit von der Verriegelungseinrichtung unabhängigen Mitteln mit der Sicherheitseinrichtung zusammenwirken. Bei üblichen mit einer Motorbremse zusammenwirkenden Sicherheitseinrichtungen kann es sich beispielsweise wie oben angeführt, um eine Motorbremseinrichtung bzw. einen Motorbremsbügel oder -hebel handeln. Es ist auch denkbar, daß die Motorbremse beispielsweise über elektrische, pneumatische, hydraulische oder mechanische Mittel, wie ein Zug-Druck-Kabel, derart mit dem Führungsholm verbunden ist bzw. mit diesem zusammenwirkt, daß sie durch dieses in Abhängigkeit von der Stellung des Führungsholms geschlossen bzw. geöffnet wird. Die Sicherheitseinrichtung kann weiter beispielsweise derart auf den Antrieb wirken, daß dieser in Abhängigkeit von der Stellung der Sicherheitseinrichtung kurzgeschlossen wird, so daß ein Betrieb nur bei einer vorzugsweise betätigten Sicherheitseinrichtung ermöglicht wird. Es ist auch vorstellbar, daß eine Kupplung mit dem Führungsholm wirksam verbunden ist, so daß beispielsweise ein Betrieb einer oder mehrerer Arbeitseinheiten, wie beispielsweise Messern, Kehreinrichtungen etc. oder auch von Rädern nur möglich ist, wenn sich der Führungsholm in einer bestimmten Stellung, die vorzugsweise seiner Betriebsstellung entspricht, befindet. Dies ist besonders günstig bei Geräten bei denen bereits eine Kupplung zum Zuschalten von Arbeitsgeräten vorgesehen ist.

Die Verriegelungseinrichtung kann ein Anschlagmittel aufweisen, dessen Stellung beispielsweise durch ein Zug-Druck-Kabel, das vorzugsweise direkt oder indirekt mit der Sicherheitseinrichtung zusammenwirken kann, beinflußt bzw. bestimmt wird. Das Zug-Druck-Kabel kann beispielsweise derart auf das vorzugsweise schwenkbar an dem Gehäuse vorgesehene Anschlagmittel wirken und dessen Schwenkposition bestimmen, daß es den Führungsholm direkt oder auch über den Verriegelungshebel bzw. an diesem vorgesehene Anschlägen festlegt. Es ist aber denkbar, Hebel, Gestänge oder elektrische, beispielsweise einen Elektromagneten aufweisende, Verriegelungseinrichtungen vorzusehen. Auch kann die Verriegelungseinrichtung anstelle des Motorbremsbügels mit einem (oder auch mehreren) weiteren oder anderen (Sicherheits-) Griff(en), Hebel(n) oder Schalter(n) zusammenwirken.

Darüber hinaus kann das Zug-Druck-Kabel direkt oder indirekt auf eine Motorbremse wirken, so daß der Betrieb des Antriebs zugelassen bzw. unterbunden werden kann und eine einfache funktionelle Verbindung mit der Verriegelungseinrichtung zur Verfügung gestellt wird. Zug-Druck-Kabel werden an Geräten und insbesondere an Geräten zur Rasen-, Garten- und Grundstückspflege häufig eingesetzt, beispielsweise um einen Motorbremshebel mit einer Motorbremse zu verbinden.

Ist das Anschlagmittel in Richtung seiner geöffneten Stellung federbelastet, wird gewährleistet, daß sich das Anschlagmittel nur dann in einer Stellung befindet, in der es den Führungsholm verriegelt und in der es ein Anlassen bzw. ein Betreiben des Antriebs beispielsweise aufgrund einer wirksamen Verbindung mit einer Motorbremse etc. zuläßt, wenn es aktiv gegen die Wirkung der Feder verstellt wird. Dies kann vorzugsweise durch ein Verschwenken des Motorbremsbügels oder einer anderen Sicherheitseinrichtung erfolgen. Es ist aber auch denkbar, die Verstellung mittels elektrischer, pneumatischer oder hydraulischer Einrichtungen vorzusehen.

Die Stellung des Anschlagmittels kann über mechanische Mittel, wie beispielsweise ein Gestänge, oder auch durch elektrische, pneumatische oder hydraulische Mittel bestimmt werden. Vorzugsweise wirkt aber ein Zug-Druck-Kabel auf das Anschlagmittel. Dies kann dadurch erfolgen, daß der innenliegende Draht bzw. die Seele des Zug-Druck-Kabels mit dem Anschlagmittel verbunden ist, und dieses verstellt, oder aber dadurch daß die Außenhülle mit dem Anschlagmittel verbunden ist und der innenliegende Draht anderweitig angeschlossen ist und beispielsweise ein Betätigen bzw. Verstellen eines weiteren Bauteils ermöglicht.

Das Zug-Druck-Kabel kann auf diese Weise beispielsweise derart mit dem Anschlagmittel zusammenwirken, daß eine Veränderung der Stellung der Motorbremse nur dann möglich ist, wenn sich das Anschlagmittel in einer vorgegebenen Stellung befindet, die es vorzugsweise einnimmt, wenn sich der Führungsholm in seiner Betriebsstellung befindet, in der er nach rückwärts verschwenkt ist. Auf diese Weise kann erreicht werden, daß die Motorbremse nur geöffnet werden und somit der Antrieb angelassen bzw. betrieben werden kann, wenn der Führungsholm sich sicher in seiner Betriebsstellung befindet, und es zu keiner Gefährdung einer Bedienungsperson oder anderer Personen etc. durch ein unbeabsichtigtes Anlassen oder unkontrolliertes Betreiben des Antriebs bzw. des Geräts kommen kann.

Ist an dem Gerät darüber hinaus eine Festlegeeinrichtung vorgesehen, durch die wenigstens ein Anbauteil durch ein Verschwenken des Führungsholm an dem Gerät gesichert wird, so verbessert dies die Handhabung des Geräts. So ist ein bequemes An- und Abnehmen des Anbauteils möglich, wobei ein freier Zugang zu dem Gerät durch ein Wegschwenken des Führungsholms gewährleistet und eine Bedienungsperson nicht durch den Führungsholm behindert wird, wenn durch eine Bewegung des Führungsholms gleichzeitig eine Entriegelung bzw. Verriegelung eines Anbauteils vorgenommen wird. Dies ist für eine Bedienungsperson komfortabel, da keine zusätzliche Festlegeeinrichtung gelöst werden muß, um den Anbauteil abnehmen zu können, und darüber hinaus sichergestellt wird, daß der Anbauteil an dem Gerät gesichert ist, wenn sich der Führungsholm in einer bestimmten Stellung, bei der es sich vorzugsweise um die Stellung handelt, die er bei einem Betrieb des Geräts einnehmen wird, befindet. Auf diese Weise wird gewährleistet, daß der Anbauteil während eines Betriebs an dem Gerät gesichert ist, so daß kein unbeabsichtigtes Lösen des Anbauteils auftreten kann, durch das der Betrieb des Geräts zum Wiederanbringen des Anbauteils unterbrochen werden muß oder es zu keiner Behinderung einer Bedienungsperson oder des Gerät durch den gelösten Anbauteil kommen kann.

Bei dem Anbauteil kann es sich um einen Sammelbehälter beispielsweise zur Aufnahme von geschnittenem Pflanzenmaterial wie Gras, von Laub oder anderen Abfällen handeln, wie sie bei einem Mäh-, Räum- oder Sammelgerät anfallen. Er kann aber auch eine Leiteinrichtung, die geschnittenes oder gesammeltes Material in einer bestimmten Richtung ablegt oder eine Abdeckklappe sein, die eine Öffnung beispielsweise in der Art einer Wartungsöffnung, vorzugsweise während eines Betriebs des Geräts, verschließt, so daß eine Bedienungsperson etc. nicht unbeabsichtigt mit einer angetriebenen Arbeitseinheit . wie Mähmessern oder einer Kehreinrichtung in Berührung kommen kann.

Weist die Festlegeeinrichtung einen vorzugsweise mit dem Gehäuse schwenkbar verbindbaren Verriegelungshebel auf, so kann dieser zur Verriegelung des Anbauteils verschwenkt werden und beispielsweise in einer Aussparung des Anbauteils oder in eine Öse o.ä. an dem Anbauteil eingreifen, so daß diese bezogen auf das Gehäuse festgelegt ist. Es ist aber auch denkbar, daß die Verriegelung auf andere Weise, beispielsweise mittels eines Elektromagneten oder mittels eines verschieblichen Riegels o.ä. in Abhängigkeit von der Stellung des Führungsholms erfolgt.

Es ist möglich, daß das Anschlagmittel direkt mit dem Führungsholm oder einem Anschlag an dem Führungsholm zusammenwirkt. Besonders günstig ist es aber, wenn das Anschlagmittel oder mit diesem zusammenwirkende Anschlagelemente an dem Verriegelungshebel vorgesehen ist/sind, da dessen Stellung von der Stellung des Führungsholms abhängig ist und der Verriegelungshebel vorzugsweise bereits zwischen dem Führungsholm und dem Gehäuse bzw. dem Gerät bzw. allgemein an den Führungsholm angrenzend angeordnet ist. Um ein einfaches Eingreifen und damit Festlegen des Anschlagelements oder der Anschlagelemente zu ermöglichen, kann das Anschlagmittel zumindest bereichsweise in der Art eines Kragenelements und/oder hakenartig ausgeführt sein, so daß das Anschlagelement zumindest bereichsweise eingeschlossen werden kann bzw. unterschiedliche Anschlagflächen zur Verfügung gestellt werden.

Der Verriegelungshebel kann in Form eines beispielsweise rechteckigen Riegels ausgeführt sein, der in eine entsprechend ausgebildete Aussparung eingreifen kann. Wenn der Verriegelungshebel in der Art einer Scheibe ausgebildet ist, die vorzugsweise zwischen dem Gehäuse und dem Führungsholm angeordnet ist, führt dies zu einer einfachen Herstellung. Die scheibenartige Ausführung wirkt einem Verklemmen des Verriegelungshebels während einer Schwenkbewegung entgegen, da die Scheibenoberfläche an dem Führungsholm bzw. an dem Gehäuse oder anderen Bauteilen während des Verschwenkens entlangleiten kann.

Weist der Verriegelungshebel einen hakenartigen Abschnitt auf, so kann er mit dem Abschnitt in eine Aussparung, eine Öse, einen Haken etc. eingreifen. Vorzugsweise ist der hakenartige Abschnitt aber daran angepaßt, eine Halteeinrichtung beispielsweise in der Art eines Tragstifts, der an dem Anbauteil, an einem Traggriff oder einem Traggestell etc. des Anbauteils vorgesehen ist, aufzunehmen bzw. zu übergreifen, um den Anbauteil an dem Gerät zu sichern.

Der Verriegelungshebel und der Führungsholm können zwar auch eine gemeinsame Schwenkachse aufweisen; sind die Schwenkachsen aber beabstandet vorgesehen, so ergibt sich eine Geometrie, die ein Übergreifen des Verriegelungshebels über den Anbauteil bzw. über die Halteeinrichtung begünstigt. Der Anbauteil bzw. die Halteeinrichtung sind üblicherweise von der Schwenkachse des Führungsholms nach hinten bzw. nach hinten und oben beabstandet angeordnet, was durch den Abstand der Schwenkachsen ausgeglichen werden kann.

Es ist denkbar und Teil der erfinderische Lehre, daß die Stellung des Führungsholms bezogen auf das Gerät mittels eines Sensors ermittelt und über elektrische Mittel, beispielsweise in der Art von Leitungen, an die Festlegeeinrichtung weitergegeben wird. Abhängig von der Ausgabe des Sensors kann dann beispielsweise mittels eines Antriebs die Stellung des Verriegelungshebels beeinflußt werden oder auch ein Elektromagnet derart beaufschlagt werden, daß er den Anbauteil an dem Gerät festlegt. Es ist auch eine hydraulische oder pneumatische Übertragung der Information über die Stellung des Führungsholms bezogen auf das Gerät denkbar. Diese Wirkung kann aber auch mittels einer direkten oder indirekten mechanischen Verbindung des Führungsholms mit der Festlegeeinrichtung erzielt werden. Vorzugsweise greift hierzu der Verriegelungshebel bzw. ein an dem Verriegelungshebel vorgesehener Bauteil, beispielsweise in der Art eines abstehenden Stifts, in eine Ausnehmung des Führungsholms ein, so daß ein Verschwenken des Führungsholms in einer Schwenkbewegung des Verriegelungshebels resultiert. Es ist aber auch eine umgekehrte Ausführung in der Art denkbar, daß der Führungsholm bzw. ein mit diesem verbundener bzw. verbindbarer Bauteil in eine Aussparung oder auch in eine Öse etc. an dem Anbauteil oder dem Verriegelungshebel eingreift.

Um einem Verklemmen entgegenzuwirken, ist es vorgesehen, daß die Ausnehmung in der Art eines Langlochs ausgeführt ist, um unterschiedliche Schwenkkreise des Führungsholms bzw. des Verriegelungshebels auszugleichen.

Ist an dem Gerät ein vorzugsweise rampenartiges Stützelement vorgesehen, kann dieses mit der Festlegeeinrichtung derart zusammenwirken, daß der Anbauteil durch das Stützelement, das vorzugsweise in einem rückwärtigen Bereich des Gehäuses angeordnet ist, aufgenommen wird und die Festlegeeinrichtung bzw. der Verriegelungshebel den Anbauteil auf dem Aufnahmemittel festlegen. Eine rampenartige Ausführung, die vorzugsweise nach rückwärts ansteigend ausgeführt ist, bewirkt, daß der Anbauteil durch sein Eigengewicht in Richtung auf das Gehäuse bzw. das Gerät hin belastet wird, was einem ungewollten Lösen des Anbauteils entgegenwirkt. Das Stützmittel kann dabei glatt ausgeführt sein oder eine oder mehrere Vertiefungen aufweisen, um den Anbauteil in einer oder mehreren festgelegten Positionen aufnehmen zu können bzw. um einem unkontrollierten Gleiten des Anbauteils auf dem Aufnahmemittel entgegenzuwirken. In einfacher Form kann die Oberfläche hierzu wellig ausgeführt sein.

Eine hohe Benutzersicherheit wird erreicht, wenn die Festlegeeinrichtung mit einem Antrieb des Geräts derart zusammenwirkt, daß der Betrieb des Antriebs unterbunden wird, wenn sich der Führungsholm nicht in einer bestimmten Stellung, bei der es sich vorzugsweise um seine Betriebsstellung handelt, befindet. Dadurch wird sichergestellt, daß der Antrieb nur angelassen oder betrieben werden kann, wenn durch den nach rückwärts geschwenkten Führungsholm sichergestellt wird, daß zwischen dem Gerät bzw. seinen Arbeitsmitteln wie Mähmessern oder Kehreinrichtungen etc. ein gewisser Sicherheitsabstand vorhanden ist, so daß kein unbeabsichtigter Kontakt der Bedienungsperson mit den Arbeitsmitteln auftreten kann. Dies kann beispielsweise dadurch erfolgen, daß die Festlegeeinrichtung beispielsweise über ein Zug-Druck-Kabel oder auch elektrisch, hydraulisch, pneumatisch oder über Gestänge oder Hebel mit einer Motorbremse zusammenwirkt, die beispielsweise derart ausgebildet sein kann, daß sie Bremsmittel in Form von Bremsbacken oder Bürsten aufweist, die auf ein Polrad oder ein Schwungrad eines Motors bzw. des Antriebs wirken können. Die Bremsmittel sind vorzugsweise federbelastet, so daß sie in unbetätigtem Zustand an dem Polrad bzw. Schwungrad anliegen, wodurch ein Betrieb des Antriebs unterbunden wird. Es kann auch vorgesehen sein, daß der Antrieb kurzgeschlossen wird, wenn sich der Führungsholm nicht in der vorgesehenen Betriebsstellung befindet, so daß der Betrieb des Antriebs wiederum unterbunden wird. Auch eine Kombination der genannten Mittel ist vorteilhaft einsetzbar.

Wenn ein Rad oder mehrere Räder des Geräts gebremst werden können, wenn sich die Festlegeeinrichtung bzw. der Führungsholm nicht in ihrer/seiner Betriebsstellung befinden, so wird das Gerät an einem Wegrollen gehindert. Dies ist dann wichtig, wenn der Anbauteil von dem Gerät abgenommen wird, um ihn beispielsweise, wenn es sich um einen Sammelbehälter handelt, zu leeren oder wenn an dem Gerät Wartungs- oder Reinigungsarbeiten durchgeführt werden und der Führungsholm zur Verbesserung der Zugänglichkeit des Gerätes verschwenkt ist.

In der Zeichnung sind zwei nachfolgend näher beschriebene Ausführungsbeispiele der Erfindung dargestellt. Es zeigt:
- Fig. 1: eine Seitenansicht eines Geräts mit einem Führungsholm in einer Betriebsstellung,
- Fig. 2: eine entsprechende Seitenansicht mit einem bezogen auf das Gerät nach vorn geschwenkten Führungsholm,
- Fig. 3: einen vergrößerten Ausschnitt einer Verbindung zwischen dem Führungsholm und einem Gehäuse des Geräts, sowie einer Festlegeeinrichtung für einen Sammelbehälter,
- Fig. 4: eine Explosionsdarstellung der Festlegeeinrichtung mit einer an dem Gerät vorgesehenen Sicherheitseinrichtung,
- Fig. 5: eine schematische Darstellung des funktionalen Zusammenhangs zwischen dem Führungsholm, dem Verriegelungshebel, der Sicherheitseinrichtung und einer Motorbremse,
- Fig. 6: den Führungsholm in einer bezogen auf das Gerät nach vorwärts verschwenkten Stellung, wobei sich ein Anschlagmittel in einer Position befindet, in der der Führungsholm nicht festgelegt ist,
- Fig. 7: eine Darstellung entsprechend Fig. 6, wobei sich das Anschlagmittel in einer bezogen auf Fig. 6 verschwenkten Stellung befindet,
- Fig. 8: den Führungsholm in einer nach rückwärts geschwenkten Stellung, wobei sich das Anschlagmittel in einer Stellung befindet, in der es den Führungsholm nicht festlegt,
- Fig. 9: den Verriegelungshebel und den Führungsholm mit dem Anschlagmittel in einer ersten Stellung, in der der Führungsholm in seiner Betriebsstellung verriegelt ist,
- Fig. 10: eine Ansicht eines Geräts in einer zweiten Ausführungsform mit einer Verriegelungseinrichtung von oben betrachtet,
- Fig. 11: eine Seitenansicht des Geräts entsprechend Fig. 10 bei nach vorn geschwenktem Führungsholm und
- Fig. 12: eine Seitenansicht entsprechend Fig. 11, wobei sich der Führungsholm in seiner Betriebsstellung befindet.

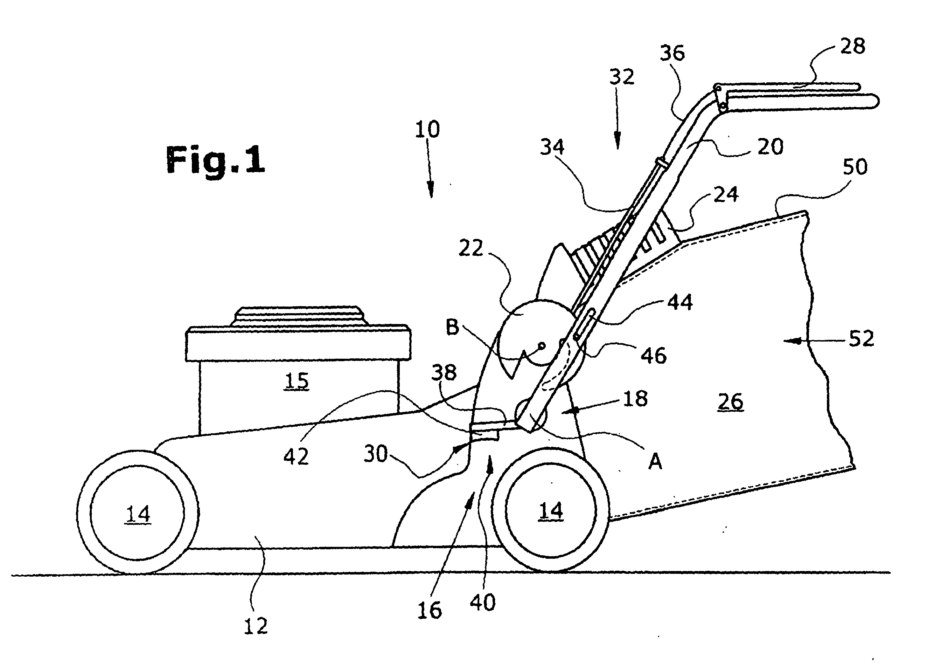

Es wird zuerst auf Fig. 1 Bezug genommen, in der ein Mähgerät bzw. ein Gerät 10 in der Art eines handgeführten oder auch handgeschobenen Rasenmähers in einer Betriebsstellung gezeigt wird. Das Gerät 10 weist ein Gehäuse 12 auf, das sich über zwei vordere und zwei rückwärtige Räder 14 auf dem Untergrund abstützt. An dem Gehäuse 12 ist ein nur andeutungsweise dargestellter Antrieb 15, beispielsweise in der Art eines Verbrennungsmotors oder auch eines elektrischen Antriebs vorgesehen, um ein oder mehrere unterhalb des Gehäuses 12 angebrachte Mähmesser oder Arbeitseinheiten, beispielsweise in der Art von Sichelmessern oder auch von Spindelmessern, in Rotation zu versetzen, um Gras bzw. Pflanzenwuchs zu schneiden. Das Gehäuse 12 weist in einem bezogen auf die übliche Betriebsrichtung des Geräts 10 rückwärtigen Bereich 16 eine nur andeutungsweise dargestellte Auswurföffnung 18 auf, über die abgeschnittene Pflanzenabschnitte das Gehäuse 12 verlassen können.

An dem rückwärtigen Bereich 16 des Gehäuses 12 ist ein Führungsholm 20 um eine Achse A, ein Verriegelungshebel 22 um eine von der Achse A zumindest nach oben beabstandete Achse B sowie eine Abdeckklappe 24 um eine nicht näher dargestellte, aber vorzugsweise weiter rückwärts angeordnete Achse schwenkbar angebracht. In der vorliegenden Darstellung wird nur der bezogen auf die übliche Betriebsrichtung des Geräts 10 linksseitige Verriegelungshebel 22 dargestellt. Vorzugsweise sind aber auf beiden Seiten des Geräts 10 Verriegelungshebel 22 vorgesehen, die entsprechend angebracht sind. An den rückwärtigen Bereich 16 angrenzend ist, wie in Fig. 1 darstellt, ein Sammelbehälter 26 lösbar an dem Gerät 10 bzw. dessen Gehäuse 12 vorgesehen, so daß in diesem die durch die Auswurföffnung 18 abgegebenen Pflanzenabschnitte gesammelt werden können, um einer späteren Entsorgungoder auch Kompostierung zugeführt zu werden.

Der Führungsholm 20 ist als Gestänge ausgebildet und weist in einem dem Gehäuse 12 bzw. der Achse A zugewandten Bereich eine Ausnehmung bzw. ein Langloch 44 auf, in das ein an dem Verriegelungshebel 22 vorgesehener Stift 46 in der Art eingreifen kann, daß eine gemeinsame Bewegung des Führungsholms 20 und des Verriegelungshebels 22 bewirkt wird.

Darüber hinaus ist an dem Führungsholm 20 in einem dem Gehäuse 12 abgewandten Bereich eine als Motorbremsbügel ausgeführte Sicherungseinrichtung 28, eine Bremseinrichtung 30 sowie ein Zug-Druck-Kabel 32 vorgesehen. Das Zug-Druck-Kabel 32 weist eine Hülle 34 und eine Seele 36 in der Art eines in der Hülle 34 verschiebbar angeordneten Drahtes auf. Das Zug-Druck-Kabel 32 ist über seine Hülle 34 in einem der Sicherungseinrichtung 28 zugewandten Bereich des Führungsholms 20 mit diesem unverschiebbar verbunden und wirkt über seine Seele 36 mit der Sicherungseinrichtung 28 zusammen. Andernends wirkt das Zug-Druck-Kabel 32 mit dem Verriegelungshebel 22 und weiteren Bauteilen zusammen, auf die im folgenden näher eingegangen werden soll. Die Bremseinrichtung 30 ist als ein mit dem Führungsholm 20 verbundener Hebel 38 ausgeführt, der sich radial über die Achse A hinaus erstreckt und zusammen mit dem Führungsholm 20 verschwenkbar ist. An seinem der Achse A abgewandten Endbereich 40 ist er mit einem Bremsbelag 42, der auf die Räder 14 wirken kann, versehen.

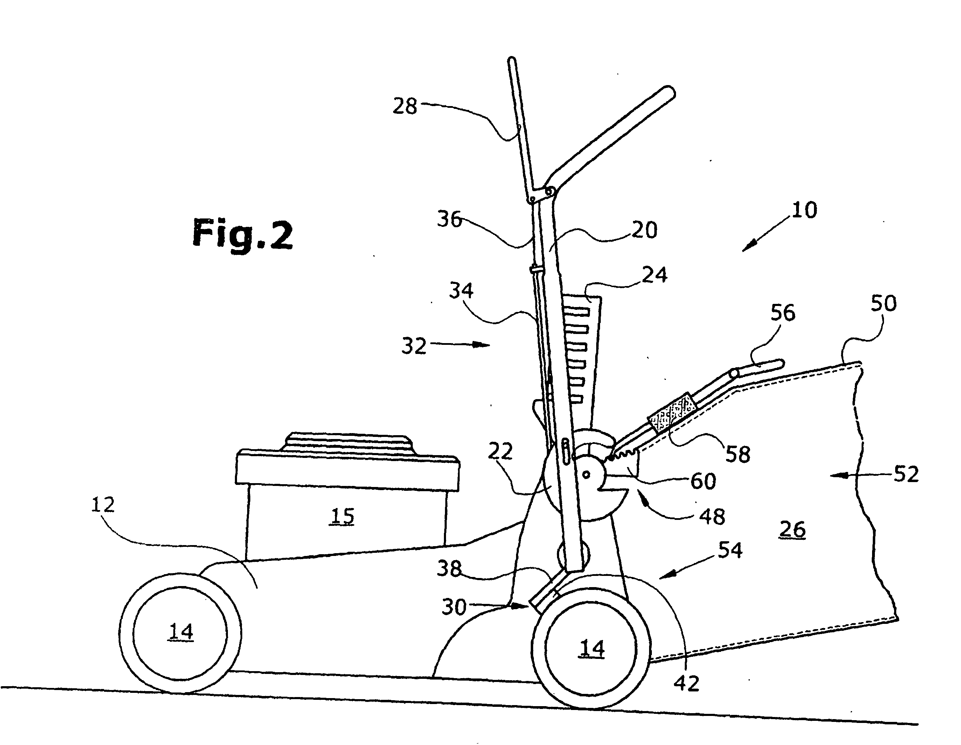

In Fig. 2 wird das Gerät 10 in einer Außerbetriebsstellung gezeigt, in der der Führungsholm 20 bezogen auf das Gehäuse 12 nach vorn und damit auch der mit dem Führungsholm 20 über das Langloch 44 und den Stift 46 in Verbindung stehende Verriegelungshebel 22 nach vorn verschwenkt ist. Wie in Fig. 2 dargestellt, wird durch ein Verschwenken des Führungsholms 20 auch die Abdeckklappe 24 in eine verschwenkte, nach oben gerichtete Stellung gebracht. Hierzu ist an dem Führungsholm 20 im Bereich der Abdeckklappe 24 ein nicht dargestellter Stift vorgesehenen, der in ein ebenfalls nicht dargestelltes Langloch oder auch einen Schlitz an der Abdeckklappe 24 derart eingreifen kann, daß die Abdeckklappe 24 einer Bewegung des Führungsholms 20 folgt. Das Langloch bzw. der Schlitz ist vorgesehen, um die unterschiedlichen Schwenkkreise der an verschiedenen Achsen angebrachten Bauteile ausgleichen zu können.

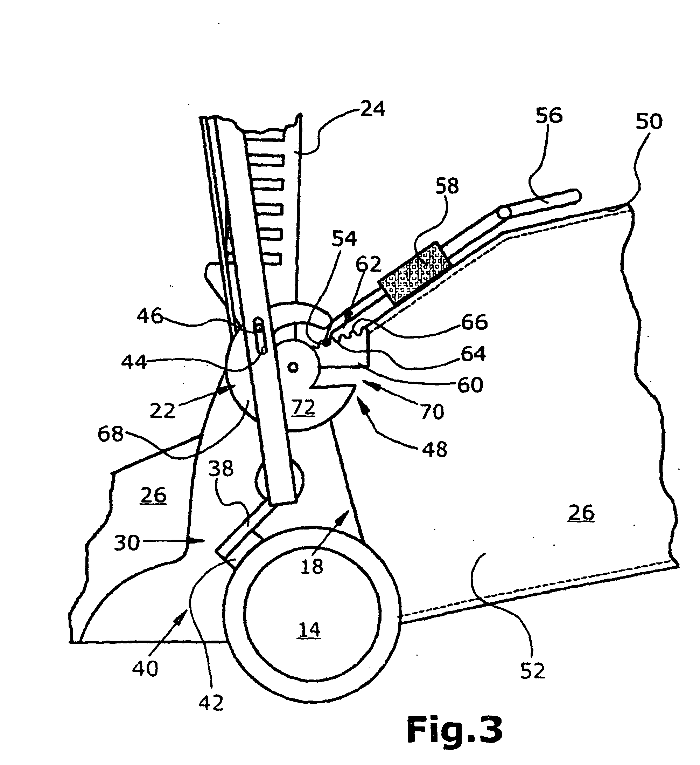

Bei nach oben geschwenkter Abdeckklappe 24 ist der Sammelbehälter 26 sowie eine Anbaueinrichtung 48, über die der Sammelbehälter 26 mit dem Gehäuse 12 verbunden werden kann, sichtbar. Es wird nun auch auf Fig. 3 Bezug genommen, die den rückwärtigen Bereich 16 des Gehäuses 12 mit den daran vorgesehenen bzw. angrenzenden Bauteilen in der in Fig. 2 dargestellten Außerbetriebsstellung zur besseren Verdeutlichung vergrößert zeigt.

Der Sammelbehälter 26 weist einen in Fig. 2 in unterbrochenen Linien dargestellten Rahmen 50 auf, der vorzugsweise durch ein Metall- oder Kunststoffgestänge gebildet wird. Dieser Rahmen 50 ist mit einer Außenhülle 52 überzogen, die beispielsweise aus einem textilen oder auch einem folienartigen Material bestehen kann. In einem Bereich, der in einem an das Gehäuse 12 angebauten Zustand der Auswurföffnung 18 zugewandt ist, weist der Sammelbehälter 26 eine nicht dargestellte Übergabeöffnung auf, so daß Pflanzenabschnitte in den Sammelbehälter 26 hineingelangen können. Oberhalb der Übergabeöffnung ist an dem Sammelbehälter 26 ein Griffelement 56 vorgesehen, das mit der Außenhülle 52 über Schlaufen 58 in Verbindung steht, so daß der Sammelbehälter 26 durch ein Angreifen an dem Griffelement 56 angehoben bzw. bewegt werden kann. Das Griffelement 56 weist in einem der Übergabeöffnung zugewandten Bereich eine Halteeinrichtung 54 auf, die durch sich bezogen auf den Sammelbehälter nach außen (vorzugsweise zumindest im wesentlichen horizontal) abstehenden Stifte auf beiden Seiten des Sammelbehälters 26 aufweist.

Die Anbaueinrichtung 48 weist zwei Stützelemente 60 (von denen wiederum nur das linksseitige gezeigt wird) auf. Ein solches Stützelement 60 ist einenends mit dem Gehäuse 12 verbunden und ragt über dieses andernends hinaus. Eine Oberseite 62 des Stützelements 60 ist derart ausgebildet, daß sie in von dem Gehäuse 12 abgewandter Richtung ansteigt, so daß sie eine Art Rampe bildet, und mehrere Vertiefungen 64 bzw. Vorsprünge 66 aufweist bzw. wellig ist.

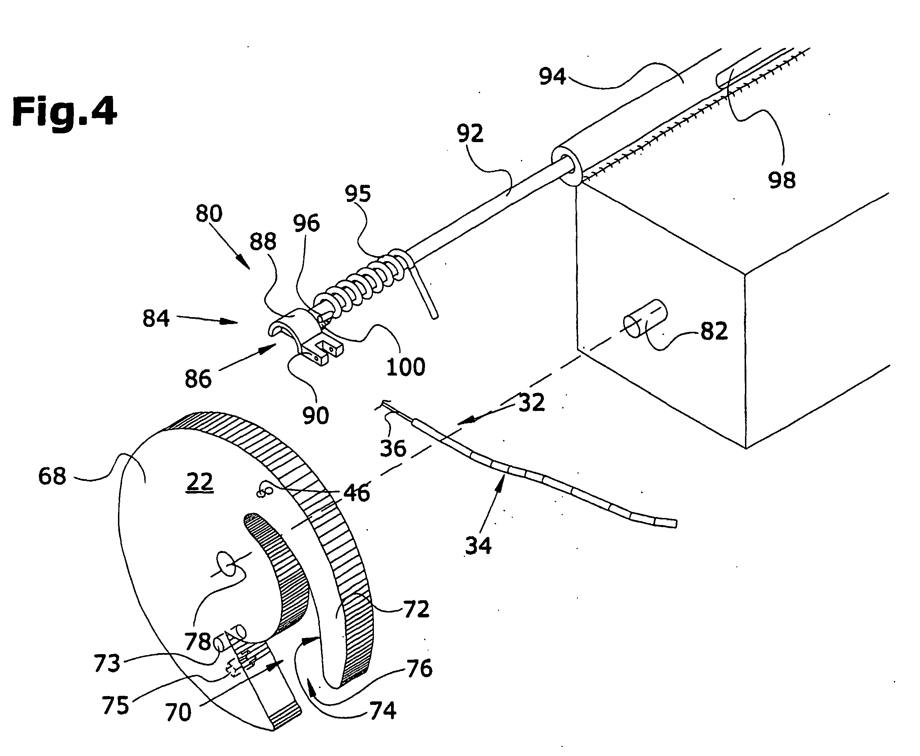

In Fig. 4 wird die Lagerung des linksseitigen der Verriegelungshebel 22 an dem Gehäuse 12 sowie eine Verriegelungseinrichtung 80 in Explosionsdarstellung gezeigt.

Es wird nun auch auf den Verriegelungshebel 22 eingegangen werden, wozu die Darstellung in Fig. 4 herangezogen wird. In dieser ist der Verriegelungshebel 22 von dem Gehäuse 12 demontiert dargestellt, wodurch seine Kontur besser sichtbar wird. Der Verriegelungshebel 22 ist als eine im wesentlichen kreisabschnittsförmige Scheibe 68 ausgeführt, die einen ausgeschnittenen Bereich 70 aufweist, der in einem im angebauten Zustand dem Sammelbehälter 26 zugewandten Bereich durch einen hakenartigen Abschnitt 72 der Scheibe 68 begrenzt wird. Der hakenartige Abschnitt 72 wird bezogen auf die Scheibenmitte innen durch eine gebogene Oberfläche 74 begrenzt, die zusammen mit der übrigen Scheibe 68 einen sich verjüngenden Ausschnitt 76 begrenzt. Darüber hinaus weist die Scheibe 68 eine bezogen auf deren Kontur zumindest im wesentlichen zentrische Öffnung 78 auf, um die sie entsprechend der Darstellung in Fig. 4 drehbar gelagert ist. An dem Verriegelungshebel 22 auf einem dem hakenartigen Abschnitt 72 gegenüberliegenden Bereich der Scheibe 68 ist ein von der Scheibe abstehendes Anschlagelement 73 sowie eine benachbart angeordnete, ebenfalls abstehende Endlagenbegrenzung bzw. ein zweites Anschlagelement 75 vorgesehen.

Der Verriegelungshebel 22 ist mit dem Gehäuse 12 über eine Achse 82 verbunden, die zumindest im wesentlichen der Dreh-Achse A entspricht. In montiertem Zustand ist die Öffnung 78 auf die Achse 82 aufgesetzt, so daß der Verriegelungshebel 22 um die Achse 82 verschwenken kann und mittels nicht dargestellter üblicher Mittel beispielsweise einer Mutter oder auch eines Sicherungsstifts gesichert wird.

Die Verriegelungseinrichtung 80 weist ein Anschlagmittel 84 auf, das eine in etwa halbkreisförmige Hauptteil 86 mit einem nach außen wegragenden Rand 88 aufweist, so daß es in der Art eines Kragenelements ausgebildet ist. An dem Hauptteil 86 ist ein radial abstehendes Hebelelement 90 vorgesehen, das einenends fest mit dem Hauptteil 86 verbunden ist und andernends derart ausgebildet ist, daß es die Außenhülle 34 des Zug-Druck-Kabels 32 unverschieblich, aber schwenkbar, aufnehmen kann. Das Anschlagmittel 84 ist fest mit einer Welle 92 verbunden, die in einem mit dem Gehäuse 12 fest verbundenen, beispielsweise verschweißten, Lagerungsrohr 94 aufgenommen wird, so daß die Welle 92 und somit das Anschlagmittel 84 mit dem Gehäuse 12 schwenkbar verbunden ist. Auf die Welle 92 ist eine Schraubendrehfeder 95 aufgesetzt, die zwei Endbereiche 96 aufweist. Einer der Endbereiche 96 wird durch eine Öffnung 98 in dem Lagerungsrohr 94 aufgenommen und der andere Endbereich 96 liegt an einem nur andeutungsweise gezeigten Vorsprung des Anschlagmittels 84 derart an, daß die Welle 92 und damit das Anschlagmittel 84 bezogen auf das Gerät 10 nach rückwärts bzw. entsprechend der Darstellung im Uhrzeigersinn belastet wird.

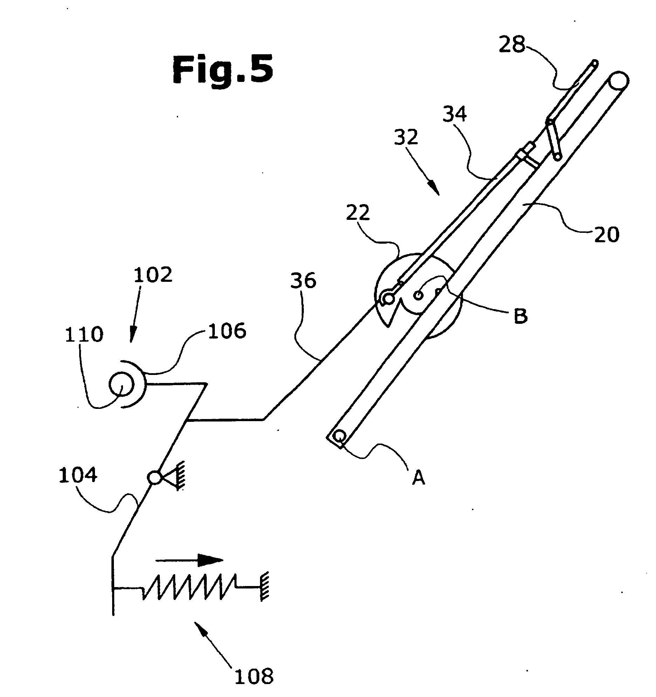

Zur Verdeutlichung des funktionellen Zusammenwirkens des Führungsholms 20 und der Sicherungseinrichtung 28 mit dem Verriegelungshebel 22 und dem Anschlagmittel 84 sowie des Zusammenhangs der genannten Bauteile mit einer Motorbremse 102 des Geräts 10 wird auf Fig. 5 Bezug genommen. Die Motorbremse 102 ist an dem Gehäuse 12 des Geräts 10 im Bereich des Antriebs 15 vorgesehen und wird in Fig. 5 nur schematisch dargestellt.

Die Motorbremse 102 weist einen schwenkbar gelagerten Bremshebel 104 auf, der einenends die Stellung einer Bremseinrichtung 106, die beispielsweise in der Art eines oder mehrerer Bremsbacken oder auch Bürsten ausgeführt sein kann, bestimmt und andernends durch eine Feder 108 belastet wird. Die Bremseinrichtung 104 wirkt auf den Antrieb 15 bzw. vorzugsweise auf ein Pol- oder Schwungrad 110 des Antriebs 15. Die Feder 108 wiederum wirkt derart auf den Bremshebel 104, daß die Bremseinrichtung 106 in Richtung einer an dem Schwungrad 110 anliegenden Stellung belastet wird, in der der Antrieb 15 nicht betrieben werden kann bzw. eine Rotation der Mähmesser bzw. ein Antrieb der Räder 14 unterbunden wird. Wie in Fig. 5 dargestellt, greift die Seele 36 des Zug-Druck-Kabels 32 ebenfalls an dem Bremshebel 104 an. Der Angriffspunkt ist dabei so gewählt, daß eine durch die Seele 36 eingebrachte Zugbewegung der Wirkung der Feder 108 entgegengesetzt ist, so daß die Bremseinrichtung 106 durch die Seele 36 von dem Schwungrad 110 abgehoben werden kann und ein Betrieb des Antriebs 15 bzw. ein Rotieren der Mähmesser bzw. ein Antrieb der Räder 14 ermöglicht wird.

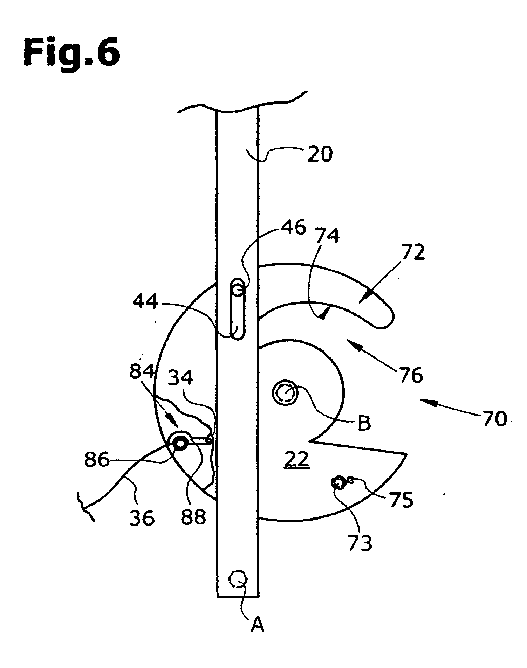

Es soll nun zuerst darauf eingegangen werden, auf welche Weise der Sammelbehälter 26 durch ein Verschwenken des Führungsholms 20 an dem Gehäuse 12 gesichert werden kann. Hierzu werden nun auch die Figuren 6 bis 9 herangezogen, wobei die ebenfalls eingezeichnete Verriegelungseinrichtung 80 zuerst außer Betracht bleiben soll, da deren Funktion später noch genauer dargelegt werden wird.

In den Figuren 2, 6 und 7 wird der Verriegelungshebel 22 in der Stellung gezeigt, die er einnimmt, wenn der Führungsholm 20 sich in einer bezogen auf das Gerät 10 nach vorn verschwenkten Stellung befindet. In dieser Stellung ist der hakenartige Abschnitt 72 des Verriegelungshebels 22 oberhalb der Aufnahmeeinrichtung 60 angeordnet und die Auswurföffnung 18 in dem Gehäuse 12 wird durch die Abdeckklappe 24 freigegeben, da wie es zuvor beschrieben wurde, sowohl die Abdeckklappe 24 als auch der Verriegelungshebel 22 einer Bewegung des Führungsholms 20 folgen. Um den Sammelbehälter 26 an dem Gerät 10 anzubringen, schwenkt eine Bedienungsperson den Führungsholm 22 nach vorn und hebt den Sammelbehälter 26 mittels des Griffelements 56 an, um ihn an die Auswurföffnung 18 heranzubringen. Die Stifte aufweisende Halteeinrichtung 54 wird auf die Stützelemente 60 der Anbaueinrichtung 48 aufgelegt. Die Halteeinrichtung 54 neigt, belastet durch das Eigengewicht des Sammelbehälters 26, dazu, in Vertiefungen 64 der Stützelemente 60 zu gelangen, so daß eine erste Sicherung des Sammelbehälters 26 erfolgt. Auch die rampenartige Ausbildung der Stützelemente 60 wirkt einem ungewollten Abrutschen des Sammelbehälters 26 entgegen, da die Stützelemente 60 in Richtung der Auswurföffnung 18 abfallen. Der abgelegte Sammelbehälter 26 neigt aufgrund seines Eigengewichts dazu, mit seinem der Halteeinrichtung 54 vertikal gegenüberliegenden Endbereich in Richtung des Geräts 12 zu schwingen, wodurch einem Abrutschen zusätzlich entgegengewirkt wird. In dieser Stellung des Führungsholms 20 wirkt die Bremseinrichtung 30 derart auf die Räder 14 des Gerätes 10 ein, daß diese zumindest im wesentlichen nicht drehen können und das Gerät 10 in dieser Außerbetriebsstellung an einem Wegrollen gehindert wird.

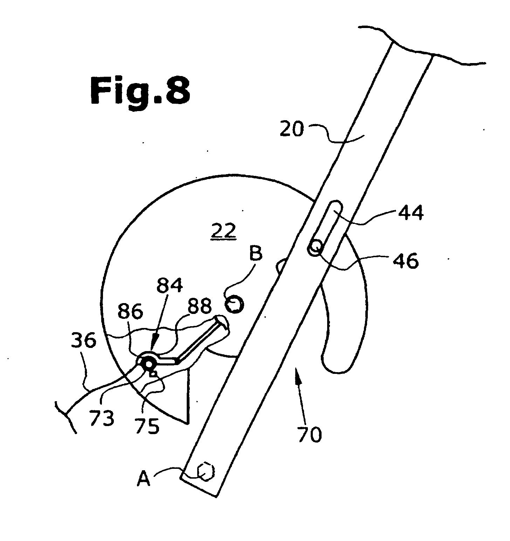

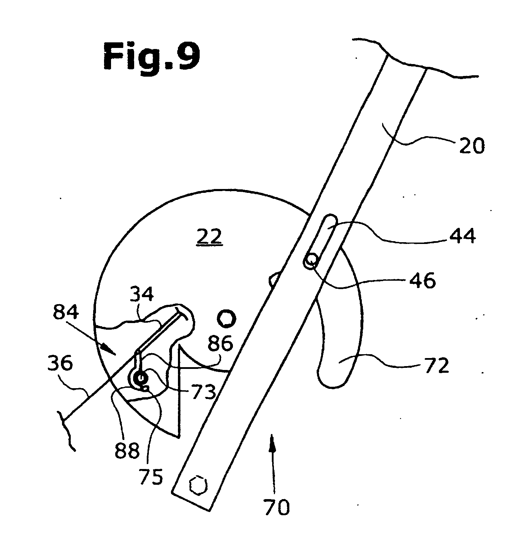

Um den Sammelbehälter 26 an dem Gerät 10 zu sichern, wird der Führungsholm 20 in die in Fig. 1 gezeigte Stellung gebracht, wobei die Figuren 8 und 9 die entsprechende Stellung des Verriegelungshebels 22 illustrieren. Während eines Schwenkens des Führungsholms 20 nach hinten, schwenkt auch der Verriegelungshebel 22 rückwärts, so daß der hakenartige Abschnitt 72 die Halteeinrichtung 54 bzw. deren Stifte übergreift und diese in den Ausschnitt 76 gelangt. Durch die sich verjüngende Ausgestaltung des Ausschnitts 76 wird die Halteeinrichtung 54 während des Verschwenkens des Verriegelungshebels 22 in diesen entlang der Kontur des Ausschnitts 76 bzw. des hakenartigen Abschnitts 72 hineingezogen, wobei dieses durch die rampenartige Ausführung der Stützelemente 60 noch weiter begünstigt wird. Auch die Abdeckklappe 24 schwenkt nach rückwärts und liegt, falls sie in diese Richtung federbelastet ist, auf dem Sammelbehälter 26 auf. Wird der Führungsholm 20 nach rückwärts geklappt, ohne daß ein Sammelbehälter 26 auf die Aufnahmeeinrichtung 48 aufgelegt wurde, so schwenkt die Abdeckklappe 24 nach rückwärts bis sie an dem Gehäuse 12 anliegt und so die Auswurföffnung 18 verschließt, um einen unbeabsichtigten Zugang zu den Mähmessern zu unterbinden. Durch die Federbelastung wird sie darüber hinaus dauerhaft in dieser Stellung gehalten.

Im folgenden soll nun auch auf die Verriegelungseinrichtung 80 eingegangen werden, die dazu dient, den Führungsholm 20 in seiner nach rückwärts verschwenkten Betriebsstellung gegen ein unbeabsichtigtes Nach-Vorn-Schwenken zu sichern bzw. einen Antrieb des Geräts 10 nur dann zu erlauben, wenn der Führungsholm 20 sich in seiner nach rückwärts geschwenkten Betriebsstellung befindet und in dieser gesichert ist.

Wie in den Figuren 5 bis 9 dargestellt und zuvor bereits andeutungsweise beschrieben, wirkt die Verriegelungseinrichtung 80 über das Zug-Druck-Kabel 32 mit der Sicherheitseinrichtung 28 und der Motorbremse 102 zusammen.

In der Darstellung nach Fig. 6 befindet sich der Führungsholm 20 in einer nach vorn geschwenkten Stellung und die Sicherheitseinrichtung 28 ist nicht betätigt, das heißt, sie wird nicht durch eine Bedienungsperson an den Führungsholm 20 herangezogen, sondern befindet sich ebenfalls in einer nach vorn geschwenkten Stellung. Auf die Verriegelungseinrichtung 80 wird keinerlei Kraft ausgewirkt, so daß sich das Anschlagmittel 84 aufgrund der Belastung durch die Schraubendrehfeder 95 in einer nach rückwärts geschwenkten Stellung befindet. Auch das Zug-Druck-Kabel 32 ist unbetätigt und wirkt weder auf die Verriegelungseinrichtung 80 noch auf den Bremshebel 104. Die Motorbremse 102 bewirkt in dieser Stellung, daß der Antrieb 15 nicht betrieben werden kann, so daß die Mähmesser nicht rotieren bzw. kein Antreiben der Räder 14 erfolgt. Der Verriegelungshebel 22 kann aus dieser Stellung zusammen mit dem Führungsholm 20 verschwenkt werden. Die Anschlagelemente 73 und 75 sind in dieser Stellung von der Verriegelungseinrichtung 80 weggeschwenkt und wirken nicht mit ihr zusammen.

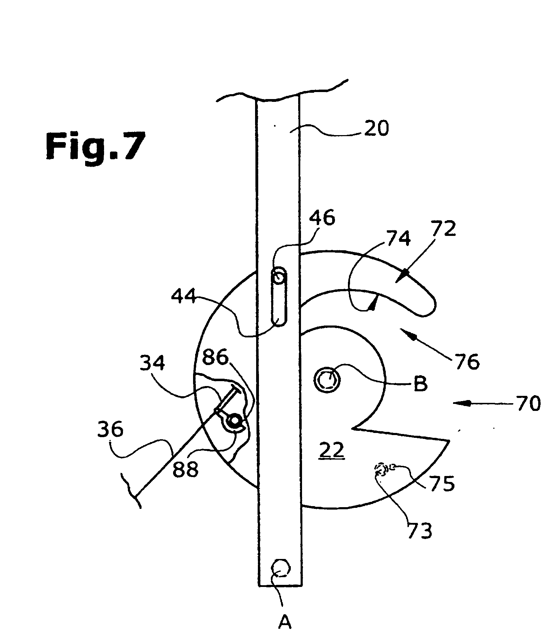

Will eine Bedienungsperson in dieser nach vorn geklappten Stellung des Führungsholms 20 den Antrieb 15 aktivieren bzw. betreiben oder kommt es zu einer unbeabsichtigten Betätigung der Sicherheitseinrichtung 28, so hat dies keinerlei Auswirkung auf die Motorbremse 102. Entsprechend der Darstellung in Fig. 7 resultiert ein Verschwenken der Sicherheitseinrichtung 28 nach hinten in einem Verschwenken des Verriegelungshebels 84 nach vorne. Durch das Verschwenken der Sicherheitseinrichtung 28 wird die locker angeordnete Seele 36 des Zug-Druck-Kabels 32 nach hinten gezogen. Da die Außenhülle 34 nur einenends fest mit einem rückwärtigen Bereich des Führungsholms 22 verbunden ist und andernends derart an dem Anschlagmittel 84 angeschlossen ist, daß sie mit diesem gegen die Wirkung der Schraubendrehfeder 95 verschwenken kann, und da die Federstärke der die Motorbremse 102 belastenden Feder 108 die Federstärke der Schraubendrehfeder 95 übersteigt, resultiert die Bewegung der Seele 36 in einer Bewegung der Außenhülle 34 nach vorn. Diese Bewegung wird dadurch hervorgerufen, daß die Länge der in der Außenhülle 34 angeordneten Seele 36 konstant bleibt und ein Längenausgleich aufgrund der Federstärkendifferenz zuerst über eine Bewegung der Außenhülle 34 erfolgt, bevor es zu einer Bewegung des Bremshebels 104 kommt. Ein Verschwenken des Führungsholms 20 aus dieser Stellung ist möglich, er kann aber nicht vollständig in seine Betriebsstellung gelangen und auch nicht in dieser verriegelt werden, da das erste Anschlagelement 73 bei betätigter Sicherheitseinrichtung 28 an der Außenseite des Rands 88 des Anschlagmittels 84 anschlägt und eine weitere Bewegung unterbindet.

In Fig. 8 wird der Führungsholm 20 in seiner vollständig nach rückwärts verschwenkten Betriebsstellung gezeigt. Das Anschlagmittel 84 befindet sich in der Lage, die es einnimmt, wenn die Sicherheitseinrichtung 28 nicht betätigt bzw. nicht nach rückwärts verschwenkt ist. Das erste Anschlagelement 73 ist wegragenden Rand 88 des Hauptteils 86 aufgenommen, wodurch die Schwenkbewegung des Führungsholms 20 begrenzt wird.

Es wird nun auch auf Fig. 9 Bezug genommen, die die Stellung des Anschlagmittels 84 zeigt, wenn die Sicherheitseinrichtung 28 ausgehend von der Darstellung in Fig. 8 betätigt wird. Ein Schwenken der Sicherheitseinrichtung 28 nach rückwärts bewirkt eine Bewegung der Seele 36 nach rückwärts. Diese Bewegung bewirkt, wie zuvor beschrieben, ein Verschwenken des Anschlagmittels 84. Diese Schwenkbewegung wird aber in der in den Figuren 8 und 9 gezeigten Stellung des Verriegelungshebels 26 durch das zweite Anschlagelement 75 begrenzt, an dem der Rand 88 bzw. die Grundform 86 des Anschlagmittels 84 zur Anlage kommt. Die Seele 36 wird durch die Sicherheitseinrichtung 28 aber weiter nach rückwärts gezogen, so daß der Bremshebel 104 gegen die Wirkung der Feder 108 bewegt wird. Dadurch wird die Motorbremse 102 deaktiviert bzw. die Bremseinrichtung 106 von dem Schwungrad 110 abgehoben, so daß der Antrieb 15 betrieben werden kann und die Mähmesser bzw. die Räder 14 angetrieben werden können. Das erste Anschlagelement 73 wird durch den Rand 88 derart aufgenommen, daß eine Bewegung des Verriegelungshebels 22 bei betätigter Sicherheitseinrichtung 28 unterbunden wird. Auf diese Weise wird der Führungsholm 20 bei betätigter Sicherheitseinrichtung 28 in seiner Betriebsstellung festgelegt, wodurch einem unbeabsichtigten Verschwenken des Führungsholms 20 nach vorn entgegengewirkt wird und ein gewisser bzw. notwendiger Abstand zwischen einer Bedienungsperson und dem betriebenen Gerät 10 gewährleistet wird.

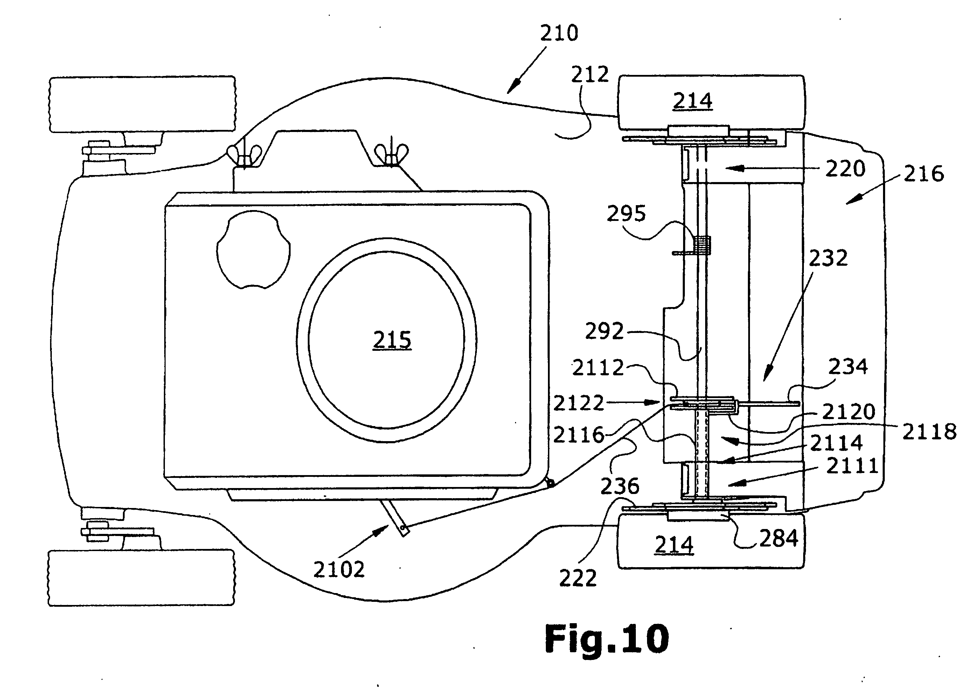

Im folgenden wird nun auf die Figuren 10 bis 12 eingegangen, in denen ein Gerät in einer zweiten Ausführurigsform gezeigt wird. Da das Gerät 10 und abgesehen von der Verriegelungseinrichtung 80 und der Lagerung des Verriegelungshebels 22 alle seine wesentlichen Bauteile entsprechend der bisherigen Darstellung ausgebildet sind, werden gleichwirkend ausgeführten bzw. sich entsprechenden Bauteilen Bezugszeichen entsprechend den Bezugszeichen des ersten Ausführungsbeispiels zugeordnet, wobei jeweils eine 2 vorangestellt wird.

Fig. 10 zeigt eine zum Teil aufgebrochene, schematische Darstellung des Geräts 210 von oben betrachtet. An bzw. in dem rückwärtigen Bereich 216 sind zwei Verriegelungshebel 222 vorgesehen, die im wesentlichen entsprechend dem Verriegelungshebel 22 des ersten Ausführungsbeispiels ausgeführt sind. Die Verriegelungshebel 222 sind schwenkbar auf eine Welle 292 aufgesetzt, die in dem rückwärtigen Bereich 216 durch übliche Lagerungen 2111 drehbar aufgenommen wird. Die Welle 292 wird durch eine Schraubendrehfeder 295 nach vorwärts bzw. gegen den Uhrzeigersinn belastet. Mit der Welle 292 ist eine Scheibe 2112 fest verbunden, die in der Art einer Riemenscheibe ausgeführt ist.

Der bezogen auf die übliche Betriebsrichtung des Geräts 210 linksseitige Verriegelungshebel 222 ist mit einer Halterung 2114 fest verbunden, so daß diese zusammen mit dem Verriegelungshebel 222 auf der Welle 292 verschwenkt werden kann. Die Halterung 2114 weist ein sich bezogen auf das Gerät 210 auf der Welle 292 nach innen erstreckendes Rohr 2116 auf. Das Rohr 2116 endet angrenzend an die Scheibe 2112 und weist an seinem Endbereich 2118 einen Halterungsfortsatz 2120 auf. Die Welle 292 wirkt darüber hinaus mit einer Verriegelungseinrichtung 280 zusammen, die ein rechtsseitiges sowie ein linksseitiges Anschlagmittel 284 aufweist, wobei beide Anschlagmittel 284 auf der Welle 292 an die Verriegelungshebel 222 außen angrenzend angeordnet sind. Die Anschlagmittel 284 sind mit der Welle 292 fest verbunden, so daß sie zusammen mit dieser verschwenken können.

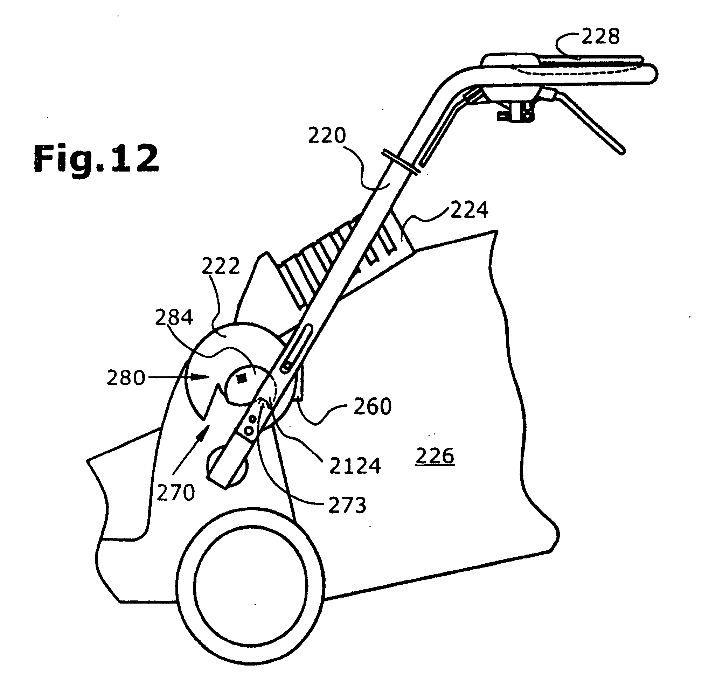

Die Anschlagmittel 284 sind in der Art von Hakenscheiben ausgebildet, wobei ihre Außenkontur entsprechend der Darstellung in den Figuren 12 und 13 durch ihre Funktion bestimmt wird, wie es noch genauer dargelegt werden soll.

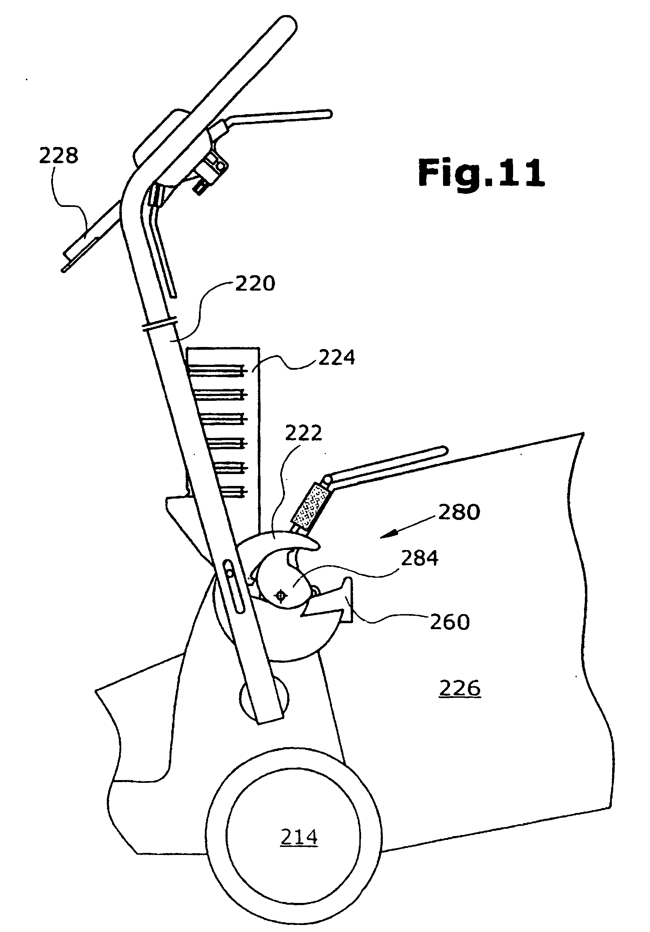

Es soll nun nochmals auf Fig. 10 Bezug genommen werden, da anhand dieser Darstellung die Verbindung der einzelnen Bauteile am besten sichtbar wird. Die Fig. 11 und 12 sind zur Verdeutlichung der Abhängigkeit der Stellung des Verriegelungshebels 222 sowie des Anschlagmittels 284 von der Stellung des Führungsholms 220 heranzuziehen.

Auch in diesem zweiten Ausführungsbeispiel wirkt die Sicherungseinrichtung 284 mit einem Zug-Druck-Kabel 232 zusammen. Die Hülle 234 des Zug-Druck-Kabels 232 ist unverschieblich, vorzugsweise aber schwenkbar mit dem Halterungsfortsatz 2120 verbunden. Die Seele 236 des Zug-Druck-Kabels 232, die sich über den Halterungsfortsatz 2120 hinaus erstreckt, wird durch eine Vertiefung 2122 in der Art einer Rille in der Scheibe 2112 aufgenommen und ist weiter durch eine nicht dargestellte Bohrung in der Scheibe 2112 geführt und wirkt entsprechend der Darstellung in dem ersten Ausführungsbeispiel auf eine Motorbremse 2102. An der Seele 236 ist einerseits der Bohrung in Richtung der Motorbremse 2102 eine Verdickung in der Art vorgesehen, daß eine Bewegung der Seele 236 in Richtung des Gehäuses 212 möglich ist, die Verdickung aber bei einer Bewegung nach rückwärts an der Wandung der Bohrung zur Anlage kommt, so daß ein weiterer Zug an der Seele 236, verursacht durch ein Nach-Rückwärts-Schwenken der Sicherungseinrichtung 228, zu einem Nach-Rückwärts-Schwenken der Scheibe 2112 gegen die Wirkung der Schraubendrehfeder 295 führen kann.

Fig. 11 zeigt den Führungsholm 220 in einer nach vorn geschwenkten Stellung. Entsprechend der Darstellung in dem ersten Ausführungsbeispiel (Fig. 2) ist auch der Verriegelungshebel 222 durch seine funktionelle Verbindung mit dem Führungsholm 220 nach vorn geschwenkt. Entsprechend befindet sich der Halterungsfortsatz 2120 in einer nach vorn verschwenkten Stellung, so daß er sich im Gegensatz zu der in Fig. 10 gezeigten Stellung nach vorn erstreckt. Auch das Anschlagmittel 284 ist nach vorn verschwenkt, da die Welle 292, auf der es drehfest angeordnet ist und mit der es verschwenkt, durch die Schraubendrehfeder 295 nach vorn belastet wird.

Wird bei nach vorn geklapptem Führungsholm 220 absichtlich oder auch unabsichtlich die Sicherungseinrichtung 228 betätigt, bzw. nach rückwärts geschwenkt, so wird zwar die Seele 236 nach rückwärts gezogen, es kommt aber zu keiner bzw. einer nur geringfügigen Bewegung der Welle 292 und es wird durch die Seele 236 keine Wirkung auf die Motorbremse 2102 ausgeübt.

In Fig. 12 wird der Führungsholm 228 in seiner nach rückwärts geschwenkten Stellung gezeigt, in der auch der Verriegelungshebel 222 nach rückwärts geschwenkt ist. Das Anschlagmittel 284 wird ebenso in einer nach rückwärts geschwenkten Stellung gezeigt, die es einnimmt, wenn auch die Sicherungseinrichtung 228 nach rückwärts verschwenkt bzw. betätigt ist. Durch ein Verschwenken der Sicherungseinrichtung 228 bei nach rückwärts geschwenktem Führungsholm 220, wird die Seele 236 nach rückwärts gezogen und bewegt somit die Scheibe 2112, die Welle 295 und auch das Anschlagmittel 284 nach rückwärts. Da sich auch der Verriegelungshebel 222 in seiner nach rückwärts geschwenkten Stellung befindet, ist der Halterungsfortsatz 2120 in der in Fig. 10 gezeigten, sich nach rückwärts erstreckenden Position, angeordnet.

Ist die Sicherungseinrichtung 228 bei nach rückwärts verschwenktem Führungsholm 220 nicht betätigt, so ist auch die Welle 292 mit der Scheibe 2112 und dem Sicherungsmittel 284 nach vorn verschwenkt. Die Seele 236 des Zug-Druck-Kabels 230 wird nicht nach rückwärts gezogen und die Motorbremse 2102 ist nicht geöffnet. Da das Anschlagmittel 284 nach vorn verschwenkt ist, greift es nicht an dem Anschlagelement 273 an dem Verriegelungshebel 222 an, und der Führungsholm 220 ist nicht verriegelt bzw. es ist möglich, ihn nach vorn zu verschwenken.

Wird die Sicherungseinrichtung 228 betätigt, wird die Seele 236 nach rückwärts gezogen und die Welle 292 dreht sich aufgrund des Angreifens der Seele 236 an der Scheibe 2112 nach rückwärts bzw. im Uhrzeigersinn. Da sich der Führungsholm 220 in seiner nach rückwärts geschwenkten Betriebsstellung befindet, befindet sich das Anschlagelement 273 in solch einer Position, daß das Anschlagmittel 284 derart an ihm angreifen bzw. anschlagen kann, daß es eine weitere Bewegung der Welle 292 nach rückwärts unterbindet. Durch ein weiteres Nach-Rückwärts-Schwenken der Sicherungseinrichtung 228 wird nun die Seele 232 weiter nach rückwärts gezogen, wodurch sie bezogen auf die ebenfalls festgelegte Außenhülle 234 nach rückwärts gezogen wird und sie so auf die Motorbremse 2102 wirken kann, um einen Betrieb des Antriebs 215 zu ermöglichen.

Die Kontur des Sicherungsmittels 284 ergibt sich entsprechend der vorstehenden Beschreibung sowie der Darstellung in den Fig. 10 und 11 daraus, daß es sowohl ein Angreifen an dem Anschlagelement 273 bei nach rückwärts geschwenktem Führungsholm 220 als auch ein Vorbeischwenken des Anschlagelements 273 an dem Anschlagmittel 284 während eines Nach-Vorn-Schwenkens des Führungsholms 220 und einer nicht betätigten Sicherungseinrichtung 228 ermöglichen muß. Darüber hinaus weist das Anschlagmittel 284 einen hakenartigen Abschnitt 2224 auf, der das Anschlagmittel 273 zur Verriegelung des Führungsholms 220 derart übergreifen kann, daß ein Nach-Vorn-Schwenken desselben unterbunden wird. Hierbei ist es vorteilhaft, wenn das Anschlagelement 273 derart angeordnet ist, daß ein Nach-Vorn-Drücken des Führungsholms 220 in seiner verriegelten Stellung eine Belastung erzeugt, die sich durch die von der Welle 292 gebildete Schwenkachse erstreckt, um Scherwirkungen hervorrufenden Belastungen des Anschlagmittels 284 entgegenzuwirken, so daß dieses kostengünstig, beispielsweise aus einem Kunststoffmaterial gefertigt werden kann.

Es ist anzumerken, daß in dem gezeigten Ausführungsbeispiel die Scheibe 2112 in einem linksseitigen Bereich des Geräts 210 angeordnet ist, da dort auch die Motorbremse 2102 vorgesehen ist. Bei einem abweichenden Anbauort einer Motorbremse, beispielsweise in einem mittleren oder rechtsseitigen Bereich, kann die Position der Scheibe 2112 entsprechend angepaßt werden, so daß eine günstige Führung und somit eine unbehinderte Anordnung der Seele 236 gewährleistet ist. Es kann aber auch vorgesehen sein, daß die Seele 236 des Zug-Druck-Kabels 232 auf eine erste Scheibe wirkt und eine weitere, vorzugsweise ebenfalls auf der Welle 292 aufgesetzte Scheibe über ein weiteres Übertragungsmittel, beispielsweise einen Seilzug, auf die Motorbremse 2102 wirkt, um einen Versatz zwischen der Anordnung der Motorbremse 2102 und dem Zug-Druck-Kabel 230 in einfacher Weise auszugleichen oder um anderen baulichen Anforderungen gerecht werden zu können.

Darüber hinaus soll noch darauf hingewiesen werden, daß ein zuvor beschriebenes Gerät 10, 210 mit einem schwenkbaren Führungsholm 20, 220 die Möglichkeit bietet, das Gerät 10, 210 bei nach vorn geschwenktem Führungsholm 20, 220 beispielsweise zu Wartungszwecken nach rückwärts zu kippen, wobei sich das Gerät über den Führungsholm 20, 220 auf dem Untergrund abstützt. Der Führungsholm 20, 220 kann hierzu in seiner nach vorn geschwenkten Stellung beispielsweise durch eine einfache Steck- bzw. Stiftverbindung oder auch einen Riegel gesichert werden. Auf diese Weise wird ein komfortabler Zugang zu der Unterseite des Geräts 10, 210 ermöglicht, beispielsweise um Reinigungs- oder Wartungsarbeiten von dort angeordneten Arbeitseinheiten bzw. den Mähmessern durchführen zu können. Der Schwerpunkt des Geräts 10, 210 ist in dieser Stellung zwischen der Drehachse der rückwärtigen Räder 14, 214 und dem Berührungspunkt des Führungsholms 20, 220 mit dem Untergrund angeordnet, so daß sich das Gerät 10, 210 in einer stabilen Gleichgewichtslage befindet. Dieses Merkmal kann auch an einem Gerät 10, 210 vorgesehen werden, das nicht die zuvor beschriebene Sicherheitseinrichtung bzw. die Festlegeeinrichtung aufweist, sondern allgemein mit einem beweglichen bzw. vorzugsweise verschwenkbaren Führungsholm 20, 220 ausgestattet ist.

## Patentansprüche

1. Gerät (10, 210) vorzugsweise zur Rasen-, Garten- bzw. Grundstückspflege, mit einem beweglich mit dem Gerät verbindbaren Führungsholm (20, 220), **dadurch gekennzeichnet, dass** der Führungsholm (20, 220) in eine Stellung bringbar ist, in der sich das Gerät (10, 210) in einem nach rückwärts geschwenkten Zustand mittels des Führungsholms (20, 220) derart auf einem Untergrund abstützen kann, daß es sich in einer stabilen Gleichgewichtslage befindet.

2. Gerät nach Anspruch 1, **dadurch gekennzeichnet, daß** es sich bei der Stellung um eine bezogen auf das Gehäuse (12) nach vorn geschwenkte Außer-Betriebs-Stellung des Führungsholms (20, 220) handelt.

3. Gerät nach Anspruch 1 oder 2, **dadurch gekennzeichnet, daß** der Führungsholm (20, 220) zumindest in dieser Stellung festlegbar ist.

4. Gerät nach einem oder mehreren der vorherigen Ansprüche, **gekennzeichnet durch** eine Sicherheitseinrichtung (28) und eine Verriegelungseinrichtung (80, 280), wobei die Verriegelungseinrichtung (80, 280) den Führungsholm (20, 220) in einer vorbestimmten Stellung festlegt, wenn die Sicherheitseinrichtung (28) einen Betrieb des Antriebs (15, 215) und/oder wenigstens einer Arbeitseinheit zuläßt.

5. Gerät nach Anspruch 4, **dadurch gekennzeichnet, daß** die Verriegelungseinrichtung (80, 280) direkt oder indirekt mit der Sicherheitseinrichtung (28) bzw. einer Motorbremse (102, 2102) zusammenwirken kann.

6. Gerät nach einem oder mehreren der vorherigen Ansprüche, **dadurch gekennzeichnet, daß** die Verriegelungseinrichtung (80, 280) wenigstens ein vorzugsweise mit dem Gehäuse (12) schwenkbar verbundenes Anschlagmittel (84, 284) aufweist, dessen Stellung durch wenigstens ein Zug-Druck-Kabel (32, 232), das vorzugsweise direkt oder indirekt mit der Sicherungseinrichtung verbunden ist, beeinflußbar ist.

7. Gerät nach Anspruch 6, **dadurch gekennzeichnet, daß** das Zug-Druck-Kabel (32, 232) direkt oder indirekt mit einer Motorbremse (102, 2102) zusammenwirken kann.

8. Gerät nach einem oder mehreren der Ansprüche 6 bis 7, **dadurch gekennzeichnet, daß** das Anschlagmittel (84, 284) vorzugsweise in Richtung einer geöffneten Stellung federbelastet ist.

9. Gerät nach einem oder mehreren der Ansprüche 6 bis 8, **dadurch gekennzeichnet, daß** das Zug-Druck-Kabel (32, 232) über seine Seele (36, 236) oder über seine Außenhülle (34, 234) auf das Anschlagmittel (84, 284) wirkt.

10. Gerät nach Anspruch 9, **dadurch gekennzeichnet, daß** das Zug-Druck-Kabel (32, 232) derart mit dem Anschlagmittel (84, 284) zusammenwirkt, daß es die Stellung der Motorbremse (102, 2120) nur dann verändern kann, wenn sich das Anschlagmittel (84, 284) in einer vorgegebenen Stellung, in der es den Führungsholm (20, 220) in seiner Betriebsstellung sichert, befindet.

11. Gerät nach einem oder mehreren der vorherigen Ansprüche, **gekennzeichnet durch** zumindest eine Festlegeeinrichtung, **durch** die wenigstens ein Anbauteil in Abhängigkeit von der Stellung des Führungsholms (20) an dem Gehäuse (12) sicherbar ist.

12. Gerät nach Anspruch 11, **dadurch gekennzeichnet, daß** der Anbauteil ein Sammelbehälter (26) und/oder eine Abdeckklappe (24) und/oder eine Leiteinrichtung ist.

13. Gerät nach einem oder mehreren Ansprüche 11 und 12, **dadurch gekennzeichnet, daß** die Festlegeeinrichtung wenigstens einen vorzugsweise mit dem Gehäuse (12, 212) schwenkbar verbindbaren Verriegelungshebel (22, 222) aufweist, der vorzugsweise an dem Anbauteil bzw. einem mit dem Anbauteil verbindbaren Bauteil an- oder eingreifen kann.

14. Gerät nach Anspruch 13, **dadurch gekennzeichnet, daß** das Anschlagmittel (84, 284) mit wenigstens einem Anschlagelement (73, 75, 273), das vorzugsweise an dem Verriegelungshebel (22, 222) angeordnet ist, zusammenwirken kann.

15. Gerät nach Anspruch 13 oder 14, **dadurch gekennzeichnet, daß** der Verriegelungshebel (22, 222) zumindest bereichsweise in der Art einer Scheibe ausgeführt ist.

16. Gerät nach einem oder mehreren der Ansprüche 13 bis 15, **dadurch gekennzeichnet, daß** der Verriegelungshebel (22, 222) einen hakenartigen Abschnitt (72) aufweist, der vorzugsweise an oder in eine(r) Halteeinrichtung (54) des Anbauteils an-/eingreift.

17. Gerät nach einem oder mehreren der Ansprüche 13 bis 16, **dadurch gekennzeichnet, daß** der Führungsholm (20) und der Verriegelungshebel (22) voneinander radial beabstandete Schwenkachsen (A, B) aufweisen.

18. Gerät nach einem oder mehreren der Ansprüche 13 bis 17, **dadurch gekennzeichnet, daß** der Verriegelungshebel (22, 222) und der Führungsholm (20, 220) direkt oder indirekt verbindbar sind, wobei vorzugsweise eine Ausnehmung und ein in diese eingreifender Bauteil an dem Verriegelungshebel (22, 222) bzw. an dem Führungsholm (20, 220) vorgesehen sind.

19. Gerät nach Anspruch 18, **dadurch gekennzeichnet, daß** die Aussparung in der Art eines Langlochs (44) ausgeführt ist.

20. Gerät nach einem oder mehreren der Ansprüche 11 bis 19, **gekennzeichnet durch** ein vorzugsweise rampenartiges Stützelement (60) das mit der Verriegelungseinrichtung zur Sicherung des Anbauteils zusammenwirken kann.

21. Gerät nach einem oder mehreren der vorherigen Ansprüche, durch gekennzeichnet, daß ein Betrieb des Antriebs (15, 215) nicht möglich ist, wenn sich der Führungsholm (20, 220) nicht in einer bestimmten Stellung, die vorzugsweise seine Betriebsstellung ist, befindet.

22. Gerät nach einem oder mehreren der vorherigen Ansprüche, **dadurch gekennzeichnet, daß** die Verriegelungseinrichtung oder der Führungsholm (20, 220) direkt oder indirekt derart mit wenigstens einem Rad (14, 214) des Geräts (10, 210) zusammenwirken kann, daß diese zumindest im wesentlichen an einem Drehen gehindert werden.

## Claims

1. An implement (10, 210), preferably for care of lawns, gardens or plots, with a guide handle (20, 220) which can be movably attached to the implement,
**characterized in that** the guide handle (20, 220) can be brought into a position in which the implement (10, 210) can be so supported on a surface in a rearwardly tilted state by means of the guide handle (20, 220) that it is in a stable position of equilibrium.

2. An implement according to claim 1, **characterized in that** this involves setting an out of operation position of the guide handle (20, 220), swung forwards relative to the housing (12).

3. An implement according to claim 1 or 2, **characterized in that** the guide handle (20, 220) can be fixed at least in this position.

4. An implement according to one or more of the preceding claims, **characterized by** a safety device (28) and a locking device (80, 280), wherein the locking device (80, 280) fixes the guide handle (20, 220) in a predetermined position when the safety device (28) allows operation of the drive unit (15, 215) and/or at least one operating unit

5. An implement according to claim 4, **characterized in that** the locking device (80, 280) can cooperate directly or indirectly with the safety device (28) or an engine brake (102, 2102).

6. An implement according to one or more of the preceding claims, **characterized in that** the locking device (80, 280) comprises at least one stop means (84, 284), preferably pivotally connected to the housing (12) and of which the position can be affected by at least one push-pull cable (32, 232) which is preferably connected directly or indirectly to the safety device.

7. An implement according to claim 6, **characterized in that** the push-pull cable (32, 232) can cooperate directly or indirectly with an engine brake (102, 2102).

8. An implement according to one or more of claims 6 to 7, **characterized in that** the stop means (84, 284) is preferably spring biased in the direction of an opened position.

9. An implement according to one or more of claims 6 to 8, **characterized in that** the push-pull cable (32, 232) acts on the stop means (84, 284) via its cable (36, 236) or via its outer sheath (34, 234).

10. An implement according to claim 9, **characterized in that** the push-pull cable (32, 232) so cooperates with the stop means (84, 284) that it can only alter the setting of the engine brake (102, 2120) when the stop means (84, 284) is in a predetermined position, in which it secures the guide handle (20, 220) in its operating position.

11. An implement according to one or more of the preceding claims, **characterized by** at least one locating device, through which at least one attachment can be secured on the housing (12) in dependence on the position of the guide handle (20).

12. An implement according to claim 11, **characterized in that** the attachment is a reservoir (26) and/or a cover flap (24) and/or a guide device.

13. An implement according to one or more of claims 11 and 12, **characterized in that** the locating device comprises at least one locking lever (22, 222) which can preferably be pivotally attached to the housing (12,212) and can preferably engage on or in the attachment or a component connectible to the attachment.

14. An implement according to claim 13, **characterized in that** the stop means (84, 284) can cooperate with at least one stop element (73, 75, 273) which is preferably arranged on the locking lever (22, 222).

15. An implement according to claim 13 or 14, **characterized in that** the locking lever (22, 222) is implemented at least regionally in the nature of a disc.

16. An implement according to one or more of claims 13 to 15, **characterized in that** the locking lever (22, 222) has a hook-like section (72) which preferably engages on or in a retaining device (54) of the attachment

17. An implement according to one or more of claims 13 to 17, **characterized in that** the guide handle (20) and the locking lever (22) have pivotal axes (A, B) spaced radially from one another.

18. An implement according to one or more of claims 13 to 17, **characterized in that** the locking lever (22, 222) and the guide handle (20, 220) can be connected directly or indirectly, wherein a recess and a component which can engage therein are provided one on the locking lever (22, 222) and one on the guide handle (20, 220).

19. An implement according to claim 18, **characterized in that** the recess is made in the nature of a slot.

20. An implement according to one or more of claims 11 to 19, **characterized by** a support element (60) which is preferably of ramp-like form and which can cooperate with the locking device to secure the attachment.

21. An implement according to one or more of the preceding claims, **characterized in that** operation of the drive unit (15, 215) is not possible when the guide handle (20, 220) is not in a predetermined position, which is preferably its operating position.

22. An implement according to one or more of the preceding claims, **characterized in that** the locking device or the guide handle (20, 220) can cooperate directly or indirectly with at least one wheel (14, 214) of the implement (10,210) in such a manner that this is at least substantially prevented from rotation.

## Revendications

1. Appareil (10, 210), de préférence pour l'entretien du gazon, jardin et terrain, comportant un guidon (20, 220) apte à être assemblé de manière mobile avec le dispositif, **caractérisé en ce que** le guidon (20, 220) peut être amené dans une position dans laquelle l'appareil (10, 210), dans une position basculée vers l'arrière au moyen du guidon (20, 220), peut venir en appui sur une base, de telle sorte qu'il est en position d'équilibre stable.

2. Appareil selon la revendication 1, **caractérisé en ce que** ladite position est une position hors service du guidon (20, 220), basculée vers l'avant par rapport au carter (12).

3. Appareil selon la revendication 1 ou 2, **caractérisé en ce que** le guidon (20, 220) peut être bloqué au moins dans cette position.

4. Appareil selon une ou plusieurs des revendications précédentes, **caractérisé par** un dispositif de sécurité (28) et un dispositif de verrouillage (80, 280), le dispositif de verrouillage (80, 280) bloquant le guidon (20, 220) dans une position prédéfinie lorsque le dispositif de sécurité (28) autorise un fonctionnement du moteur (15, 215) et/ou d'au moins une unité de travail.

5. Appareil selon la revendication 4, **caractérisé en ce que** le dispositif de verrouillage (80, 280) peut coopérer directement ou indirectement avec le dispositif de sécurité (28) ou un frein moteur (102, 2102).

6. Appareil selon une ou plusieurs des revendications précédentes, **caractérisé en ce que** le dispositif de verrouillage (80, 280) comporte au moins un moyen de butée (84, 284) qui, de préférence, est assemblé de manière pivotante avec le carter (12) et dont la position peut être influencée par au moins un câble de traction et compression (32, 232), qui est relié de préférence directement ou indirectement avec le dispositif de sécurité.

7. Appareil selon la revendication 6, **caractérisé en ce que** le câble de traction et compression (32, 232) coopère directement ou indirectement avec un frein moteur (102, 2102).

8. Appareil selon une ou plusieurs des revendications 6 à 7, **caractérisé en ce que** le moyen de butée (84, 284) est sollicité par un ressort de préférence dans le sens d'une position ouverte.

9. Appareil selon une ou plusieurs des revendications 6 à 8, **caractérisé en ce que** le câble de traction et compression (32, 232) agit sur le moyen de butée (84, 284) par l'intermédiaire de son âme (36, 236) ou de sa gaine extérieure (34, 234).

10. Appareil selon la revendication 9, **caractérisé en ce que** le câble de traction et compression (32, 232) coopère avec le moyen de butée (84, 284) de telle sorte que la position du frein moteur (102, 2120) ne peut être modifiée que si le moyen de butée (84, 284) est dans une position prédéfinie, dans laquelle il bloque le guidon (20, 220) dans sa position de service.

11. Appareil selon une ou plusieurs des revendications précédentes, **caractérisé par** au moins un dispositif de blocage, par lequel au moins un accessoire peut être bloqué sur le carter (12) en fonction de la position du guidon (20).

12. Appareil selon la revendication 11, **caractérisé en ce que** l'accessoire est un réceptacle (26) et/ou un volet de fermeture (24) et/ou un élément de guidage.

13. Appareil selon les revendications 11 et 12, **caractérisé en ce que** le dispositif de blocage comporte au moins un levier de verrouillage (22, 222), qui peut de préférence être assemblé de manière pivotante avec le carter (12, 212) et qui peut de préférence s'engager sur ou dans l'accessoire ou un élément destiné à être assemblé à l'accessoire.

14. Appareil selon la revendication 13, **caractérisé en ce que** le moyen de butée (84, 284) peut coopérer avec au moins un élément de butée (73, 75, 273) qui est agencé de préférence sur le levier de verrouillage (22, 222).

15. Appareil selon la revendication 13 ou 14, **caractérisé en ce que** le levier de verrouillage (22, 222) est réalisé au moins par zones en forme de disque.

16. Appareil selon une ou plusieurs des revendications 13 à 15, **caractérisé en ce que** le levier de verrouillage (22, 222) comporte une partie (72) en forme de crochet qui de préférence s'engage sur ou dans un dispositif de support (54) de l'accessoire.

17. Appareil selon une ou plusieurs des revendications 13 à 16, **caractérisé en ce que** le guidon (20) et le levier de verrouillage (22) ont des axes de pivotement (A, B) situés à distance radiale l'un de l'autre.

18. Appareil selon une ou plusieurs des revendications 13 à 17, **caractérisé en ce que** le levier de verrouillage (22, 222) et le guidon (20, 220) peuvent être assemblés directement ou indirectement, un évidement et un élément s'engageant dans ce dernier étant prévus de préférence respectivement sur le levier de verrouillage (22, 222) et sur le guidon (20, 220).

19. Appareil selon la revendication 18, **caractérisé en ce que** l'évidement est réalisé sous forme d'un trou oblong (44).

20. Appareil selon une ou plusieurs des revendications 11 à 19, **caractérisé par** un élément d'appui (60) de préférence en forme de rampe, qui peut coopérer avec le dispositif de verrouillage pour bloquer l'accessoire.

21. Appareil selon une ou plusieurs des revendications précédentes, **caractérisé en ce que** le moteur (15, 215) ne peut pas être en marche lorsque le guidon (20, 220) n'est pas dans une position déterminée, qui est de préférence sa position de service.

22. Appareil selon une ou plusieurs des revendications précédentes, **caractérisé en ce que** le dispositif de verrouillage ou le guidon (20, 220) peuvent coopérer directement ou indirectement avec au moins une roue (14, 214) de l'appareil (10, 210), de manière à au moins empêcher une rotation de celle-ci.
